# EUROPEAN PATENT SPECIFICATION

(11) **EP 0 414 450 B1**
(45) Date of publication and mention of the grant of the patent: **17.05.1995**
(21) Application number: 90309037.1
(22) Date of filing: 17.08.1990
(51) Int. Cl.: G11B 7/085, G11B 7/09

(54) **Optical disc drive units**
Antriebseinheiten für optische Platte
Unités d'entraînement de disque optique

(30) Priority: 19.08.1989 JP 213421/89
(43) Date of publication of application: 27.02.1991
(73) Proprietor: FUJITSU LIMITED, Kawasaki-shi, Kanagawa 211 (JP)
(72) Inventor: Yanagi, Shigenori, Nakahara-ku, Kawasaki-shi, Kanagawa 211 (JP)
(74) Representative: Fane, Christopher Robin King

(56) References cited:
- EP-A- 0 302 666
- PATENT ABSTRACTS OF JAPAN vol. 012, no. 245 (P-729) 12 July 1988,& JP-A-63 037828 (RICOH CO LTD) 18 February 1988,
- PATENT ABSTRACTS OF JAPAN vol. 012, no. 086 (P-677) 18 March 1988,& JP-A-62 219335 (RICOH CO LTD) 26 September 1987,
- PATENT ABSTRACTS OF JAPAN vol. 011, no. 201 (P-590) 30 June 1987,& JP-A-62 022245 (SEIKO EPSON CORP) 30 January 1987,

## Description

The present invention relates to optical disk drive units.

In optical disk drive units the operation of reading or writing data involves an accurate tracing of a track on an optical disk. To this end, a tracking control, by which a beam spot can accurately trace the track, may be provided, and an optical head mounted on a carriage may be provided with a tracking actuator which moves the beam spot in a radial direction within a predetermined range of the track width in the carriage stationary state. The tracking actuator may comprise a magnetic field structure, as a stationary member, and a rotation member which is rotatably supported by the stationary member and which is provided with a tracking coil. In a head optical system a beam spot is moved in the radial direction of the optical disk by providing an object lens, which directs the beam spot onto the disk, on the rotation member, and by rotating the rotation member in accordance with an electric current supplied to the tracking coil.

The tracking control can be accomplished by applying feedback control to the supply of electric current to the tracking coil, such that a tracking detection signal tends to be held at zero. A tracking error detection signal, derived from the differential output signal of a two-part photodiode on which light reflected from the disk is caused to be incident by the head optical system, is used in the tracking control.

Further, a position detector using a two-part photodiode for detecting a desired neutral position of the rotation member of the tracking actuator, i.e. a position at which the rotation member should desirably be maintained when the supply of electric power to the tracking coil is cut, may be provided, and the position signal in the track direction (radial direction) is detected on the basis of the difference between the respective amounts of light incident on the two parts of the photodiode. The track direction position detection signal is used to control holding of the head carriage, which is controlled by a voice coil motor, and holds the rotation member of the actuator at the neutral position by supplying a drive current to the voice coil motor so as to hold the track direction position detection signal at zero.

As a result, the actuator is controlled by a double servocontrol wherein the actuator is controlled by applying feedback control to the tracking coil which receives the tracking error signal and to the voice-coil motor which receives the track direction position signal.

In the above-discussed control system the rotation member of the tracking actuator may be provided with a spring member for returning the rotation member to the neutral position when the electric current applied to the coil is cut off, but the equilibrium position of the rotation member when held by the spring member does not always coincide with the desired neutral position which is the position at the detection signal of the position detector is zero.

An optical information processing apparatus of the kind described above, for use with optical cards rather than optical discs, is disclosed in EP-A-0302666 for example, and may be considered to include: an optical head, movable across a main face of such an optical card when the unit is in use, for providing an optical beam to be incident at a desired point on the said main face; an actuator device, movable with the said optical head, having a beam-deflecting member that is displaceable relative to the optical head to adjust the position of the point of incidence of the said beam on the said main face, and having drive means, for controlling such displacement of the said beam-deflecting member in dependence upon a drive signal applied to the drive means, and resilient biassing means, connected effectively between the beam-deflecting member and a body portion of the device, for urging the said beam-deflecting member towards an equilibrium position when no such drive signal is applied: and position detection means for detecting when the said beam-deflecting member is at a desired neutral position relative to the said optical head.

In such apparatus, if a difference occurs between the balance (equilibrium) position to which the beam-deflecting member is urged by the resilient biassing means and the desired neutral position (zero signal position of the position detector), an offset in the tracking error signal due to a spring force is generated when the tracking control by the double servocontrol is executed. If this offset due to the spring force exists, when the tracking control is turned OFF and the track actuator is driven by velocity control at a track jump, an undershoot or overshoot occurs at the end of the track jump. Accordingly, preferably the control has a response characteristic at the track jump that is not adversely affected, because the offset due to the spring force is suppressed.

According to a first aspect of the present invention there is provided an optical disc drive unit, for supporting and rotating an optical disc, including: an optical head, movable across a main face of such an optical disc when the unit is in use, for providing an optical beam to be incident at a desired point on the said main face; an actuator device, movable with the said optical head, having a beam-deflecting member that is displaceable relative to the optical head to adjust the position of the point of incidence of the said beam on the said main face, and having drive means, for controlling such displacement of the said beam-deflecting member in dependence upon a drive signal applied to the drive means, and resilient biassing means, connected effectively between the beam-deflecting member and a body portion of the device, for urging the said beam-deflecting member towards an equilibrium position when no such drive signal is applied: and position detection means for detecting when the said beam-deflecting member is at a desired neutral position relative to the said optical head; characterised by offset compensation means, operable when no such drive signal is applied to the drive means, to determine a bias signal which, applied to the said drive means, serves to cancel any offset of the said beam-deflecting member from its said desired neutral position relative to the said optical head, and operable thereafter to superimpose the said bias signal on such drive signals applied to the said drive means.

In one embodiment the said actuator device includes a magnetic field structure that is fixed to the said optical head, and the said beam-deflecting member is a rotary member which is supported by the said magnetic field structure for rotary movement relative thereto and which carries a tracking coil; the said resilient biassing means comprising a spring member.

In another embodiment the said beam-deflecting member of the actuator device comprises a galvanomirror, connected by a spring member to the said body portion of the device, for receiving light from a light source and for reflecting such light in a direction substantially perpendicular to the direction of incidence of that light onto the galvanomirror; the actuator device further includes an object lens arranged for receiving the light reflected by the galvanomirror and for directing it to be incident on the said main face; and the said position detection means comprise a light emitter, arranged for directing light to be incident on a reflecting surface portion of the said galvanomirror, and also comprise a two-part optical sensor arranged for detecting when the light reflected by the said reflecting surface portion from the said light emitter is in a predetermined direction.

In yet another embodiment the said beam-deflecting member of the actuator device comprises a relay lens, connected by a spring member to a fixed board which serves as the said body portion of the device and movable relative to the said fixed board in a first direction, for receiving light from a light source in a direction perpendicular to the said first direction; the said actuator device further comprises a mirror arranged for reflecting light that has passed through the said relay lens in a direction substantially parallel to the said first direction, and an object lens arranged for receiving the light reflected by the said mirror and for directing it onto the said main face; and the said position detection means comprise a slit-defining portion, connected to the said relay lens so as to be responsive to such movement thereof in the said first direction and having a slit therein, and also comprise a light emitter, arranged on one side of the said slit-defining portion for directing light towards that portion, and a two-part optical sensor arranged on the other side of the said slit-defining portion for detecting passage of light from the light emitter through the said slit.

According to a second aspect of the present invention there is provided a method of eliminating an offset in an optical disc drive unit including an optical head, movable across a main face of an optical disc which is supported and rotated by the unit when in use, for providing an optical beam to be incident at a desired point on the said main face, and also including an actuator device, movable with the said optical head, having a beam-deflecting member that is displaceable relative to the optical head to adjust the position of the point of incidence of the said beam on the said main face, and having drive means, for controlling such displacement of the said beam-deflecting member in dependence upon a drive signal applied to the drive means, resilient biassing means, connected effectively between the beam-deflecting member and a body portion of the device, for urging the said beam-deflecting member towards an equilibrium position when no such drive signal is applied, and position detection means for detecting when the said beam-deflecting member is at a desired neutral position relative to the said optical head; which method comprises the steps of: determining, when no such drive signal is applied to the drive means, a bias signal which, applied to the said drive means, serves to cancel any offset of the said beam-deflecting member from its said desired neutral position relative to the said optical head; and thereafter superimposing the said bias signal on such drive signals applied to the said drive means.

Other features and advantages of the invention will be apparent from the following description given with reference to the accompanying drawings.
Figure 1 is a schematic block diagram illustrating an example of a conventional double servocontrol system of an optical disk drive;
Fig. 2A, Fig. 2B, and Fig. 2C are explanatory diagrams of tracking error signals generated in the Figure 1 system;
Fig. 3 is a schematic diagram illustrating parts of a control system embodying the invention;
Figs. 4A and 4B are block diagrams showing a tracking control circuit of an optical disk device according to an embodiment of the present invention;
Fig. 5 is an explanatory diagram showing an example of an optical system used in the optical disk device of Figures 4A and 4B;
Fig. 6 is a flowchart showing an offset measuring process in the optical disk device of Figs. 4A and 4B;
Fig. 7 is a diagram showing graphs for explaining an offset measuring process in the optical disk device of Figs. 4A and 4B;
Fig. 8 is perspective view of a first example of an actuator suitable for use in the optical disk device of Figs. 4A and 4B;
Fig. 9 is a plan view of the actuator of Fig. 8;
Fig. 10 is a side view of a rotary portion of the actuator of Fig. 8;
Fig. 11 is a circuit diagram of a detector in the actuator of Fig. 8;
Fig. 12 is an explanatory diagram of a second example of an actuator suitable for use in the optical disk device of Figs. 4A and 4B; and
Fig. 13 is an explanatory diagram of a third example of an actuator suitable for use in the optical disk device of Figs. 4A and 4B.

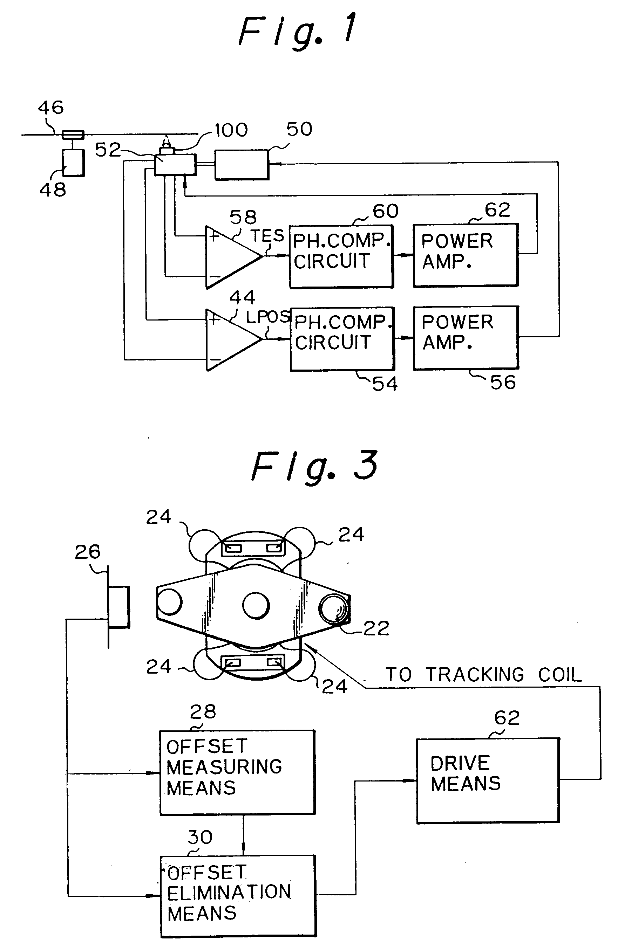

Prior to the explanation of the preferred embodiments, a previously-considered servocontrol system will be explained with reference to Figs. 1 and 8 to 11, for comparison.

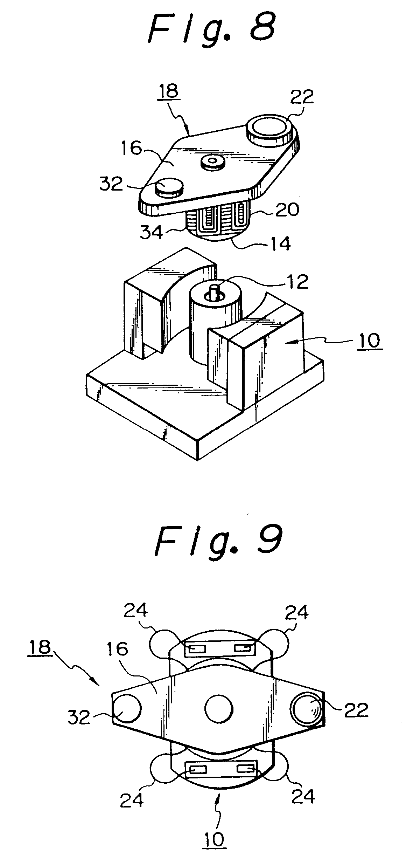

Figure 8 shows an actuator for tracking as used in an optical disk device. This is known as a two-dimensional actuator because a tracking control and a focusing control are executed simultaneously thereby.

The actuator comprises a magnetic field structure 10, serving as a stationary member and having a sliding shaft 12, and a rotation member 18, serving as a rotary member. The rotation member 18 comprises a cylinder 14 and an upper rotary arm 16, as one body, and the cylinder 14 is provided with a tracking coil 20. Further, the rotary arm 16 is provided with an object lens 22 at one end and a balance weight 32 at the other end. Furthermore, a focusing coil 34 is wound inside the tracking coil 20.

Figure 9 shows a plan view of the actuator, wherein lead wires from the magnetic field structure 10 to the tracking coil 20 and focusing coil 34 provided on the rotation member 18 act as spring members 24, whereby the rotation member 18 is held at a neutral position when the flow of electric current through the coil 20 is cut off, as shown in Fig. 9.

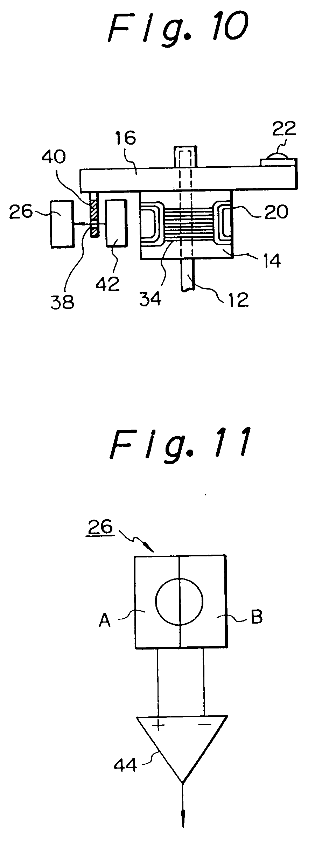

Figure 10 shows a constitution of the position detector provided in the actuator, wherein a projecting slit member 40, provided with a slit hole 38 at the lower portion in the balance weight side of the rotary arm 16, allows light from a light-emitting diode (LED) 42 provided at the inner side of the slit member 40 to be supplied to a two-part photodiode 26 acting as a position detector and arranged to face the LED 42 through the slit hole 38.

Fig. 11 shows a detection circuit for detecting the track direction position signal from the two-part photodiode 26 shown in Fig. 10, wherein a difference signal is obtained by using a differential amplifier 44 to form the difference between the two electrical signals produced respectively by the two light reception portions A and B of the photodiode 26. When the rotation member of the actuator is at the neutral position, as shown in Figure 9, the spot light is incident symmetrically with respect to the light reception portions A and B, so that the differential output signal of the differential amplifier 44 is zero when the rotation member is at the neutral position. When an amount of rotation of the actuator is increased, the detection signal increases according to the amount of rotation, and the polarity thereof indicates the rotation direction.

Figure 1 is an explanatory diagram of the previously-considered servocontrol system of the actuator.

As shown in Fig. 1, an optical disk 46 is rotated continuously by a spindle motor 48, and an optical head 100 mounted on a carriage 52 is moved radially over the optical disk 46 by a voice coil motor 50.

The actuator is mounted on the optical head 100 as shown in Figs. 8, 9 and 10, and is provided with the two-part photodiode 26 for position detection and with a further two-part photodiode, which receives light reflected from the disk, for the tracking error detection.

The two outputs of the two-part photodiode for position detection are supplied to the differential amplifier 44, a track direction position signal LPOS showing both the track direction (polarity) and the track position (signal intensity) as a difference thereof is detected, and after phase compensation, emphasizing a high frequency component, by a phase compensation circuit 54, a power amplifier 56 drives the voice coil motor 50 in such a way that the track direction position signal tends to zero.

The two outputs, based on the light reflected from the disk, produced by the further two-part photodiode are received by the head optical system and supplied to a differential amplifier 58, the tracking error signal TES is detected as a difference thereof, and the signal is used to drive the tracking coil via a phase compensation circuit 60 and a power amplifier 62 so that feedback control is executed to hold the tracking error signal TES at zero.

In the tracking actuator of Figure 8, however, the position of the rotation member 18 when balanced by the spring members 24 (i.e. the equilibrium position), shown in Fig. 9, usually does not coincide with the zero signal position of the detection signal LPOS from the two-part photodiode for the position detection shown in Fig. 8, and thus a problem arises in that, when the double servocontrol is executed by applying feedback control both to the tracking coil and to the voice coil motor, an offset due to the spring force is generated in the tracking error signal TES, and when a track jump is executed an overshoot or undershoot occurs and the stability and the response characteristic are lowered.

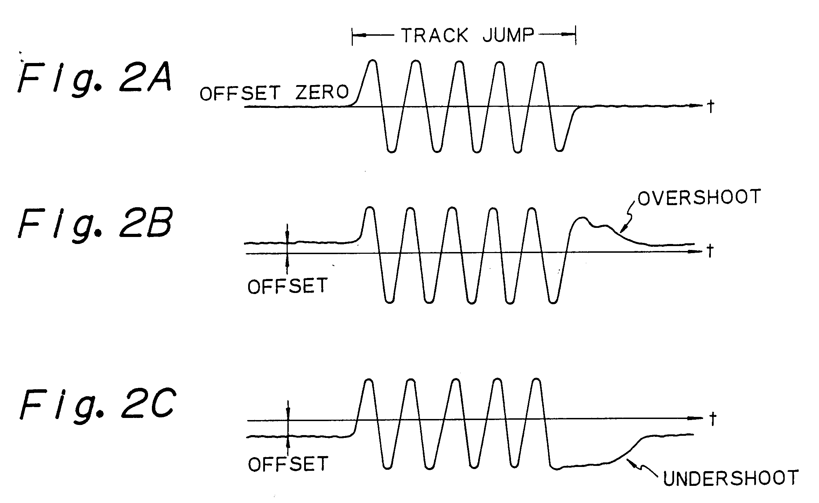

Figures 2A, 2B and 2C show an effect on the tracking error signal TES due to the spring force, at the track jump.

First, as shown in Fig. 2A, when the spring force is zero, at the end of the track jump the tracking error signal is rapidly converged to zero and the tracking servo can be turned ON.

Nevertheless, when an offset is generated due to the spring force, as shown in Figs. 2B and 2C, an overshoot or undershoot occurs in the tracking error signal TES at the end of the track jump, due to effect of the offset, and a time delay occurs before the tracking servo can be turned ON when the signal becomes zero, and thus a problem arises in that the stability and response characteristic are lowered.

An embodiment of the present invention is now explained with reference to the drawings.

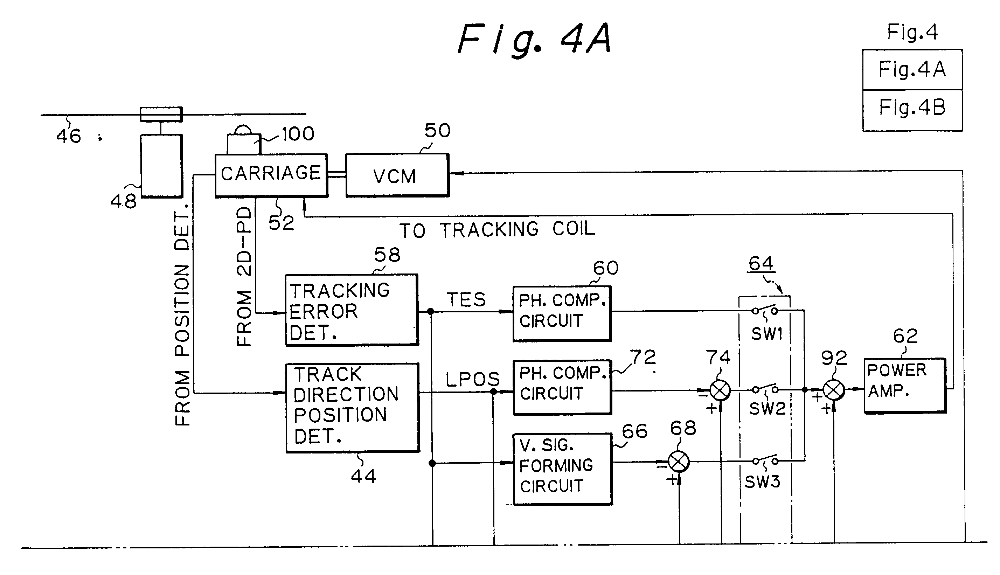

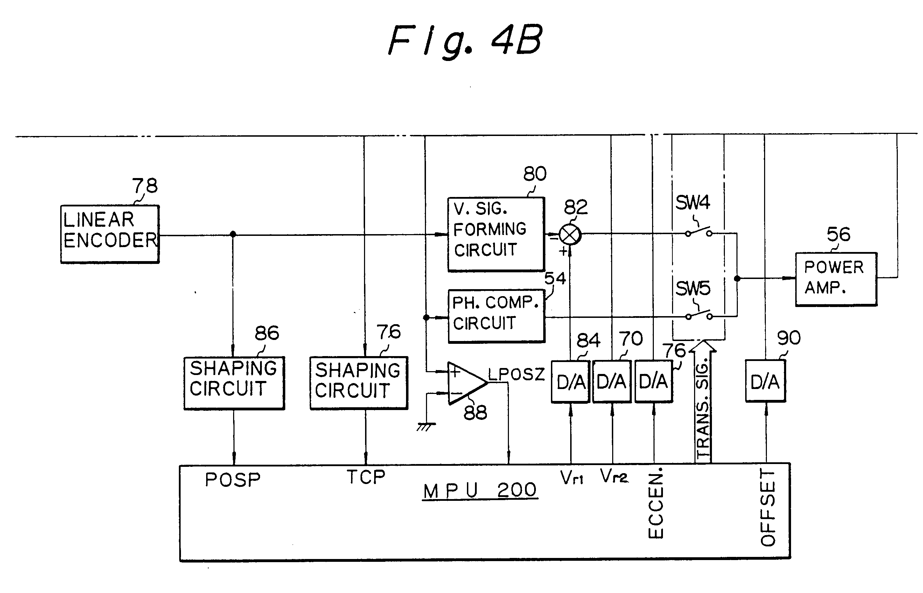

Figures 4A and 4B are block diagrams showing a tracking control circuit of an optical disk device embodying the present invention.

In Figs. 4A and 4B, 100 is an optical head mounted on a carriage 52 driven by a voice coil motor 50, and the optical head 100 is moved radially over an optical disk 46 rotated at a constant revolution speed by a spindle motor 48. The optical head 100 is provided with an actuator, as shown in Fig. 8 or Fig. 12 or Fig. 13, and a tracking coil 20 provided in the actuator moves the light beam within a predetermined number of tracks when the carriage 52 is stationary.

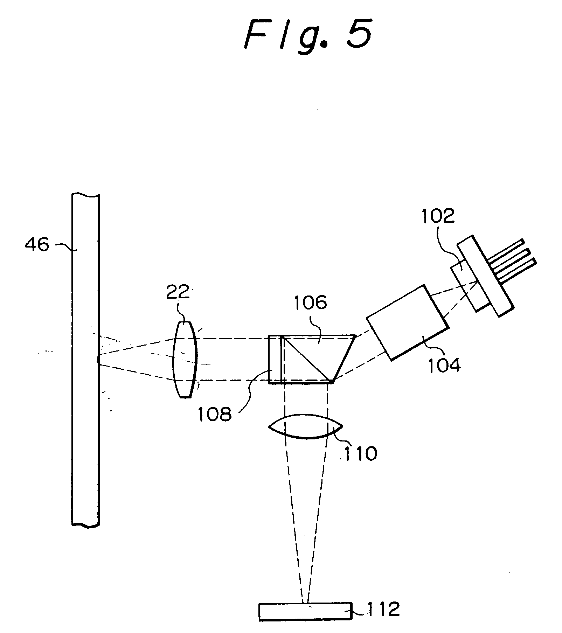

An example of a constitution of a head optical system provided in the optical head 100 is shown in Fig. 5.

In Fig. 5, 102 is a semiconductor laser, 104 is a collimator lens converting elliptical diffused light from the semiconductor laser 102 to a circular parallel beam, 106 is a polarized light beam splitter composed of a combination of two prisms, and passing a P (component) polarized light straight through whilst reflecting an S (component) polarized light in the perpendicular direction, 108 is a λ/4 plate converting incident linear polarized light to circularly polarized light, or incident circularly polarized light to linear polarized light, 22 is an object lens for illuminating the optical disk 46 with a beam spot, which beam spot has a track pitch of 1.6 micrometers, 110 is a converging lens for converging light reflected from the optical disk 46, which reflected light is reflected in the perpendicular direction by the polarized light beam splitter 106, and 112 is a two-part photodiode for detecting a tracking error and generating an output corresponding to a light intensity pattern in a portion wherein a zero order diffracted light and a first order diffracted light of diffracted light reflected by track guide groove of the optical disk 46 by the converging lens 110 are overlapped. The method of detecting the tracking error using such a two-part photodiode 112 is known as a push-pull method or a far-field method.

Returning to Figs. 4A and 4B, the two outputs (tracking error detection outputs) from the two-part photodiode 112 provided in the optical head 100 are supplied to a tracking error detector 58, and the tracking error signal TES is detected as a difference of these two outputs. Further, the two outputs from a position detector 26 using a two-part photodiode provided in the actuator are supplied to a track direction position detection circuit 44, and a track direction position detection signal LPOS is detected as a difference between those two outputs. The track direction position detection signal LPOS indicates a track position by the signal intensity, and a track direction by the signal polarity.

The tracking error signal TES from the tracking error detector 58 is supplied to a phase compensation (PH. COMP.) circuit 60 and a velocity signal (V. SIG.) forming circuit 66. The output of the phase compensation circuit 60 is supplied to a power amplifier (POWER AMP.) 62 through a transfer switch SW1 provided in a mode switching circuit 63, and the output of the velocity signal forming circuit 66 is supplied to the power amplifier 62 through an adder 68 and a transfer switch SW3 of the mode switching circuit 63. The transfer switch SW1 of the mode switching circuit 64 is turned ON when the tracking servo is operated, and at that time, the transfer switch SW3 connected to the velocity signal forming circuit 66 is made OFF. The transfer switch SW3 is turned ON when a track jump occurs, and at that time, the transfer switch SW1 is turned OFF and the tracking servo is made off. A target velocity signal Vr2 is supplied to the adder 68 receiving the output of the velocity signal forming circuit 66 from the MPU (microprocessor unit) 200 through a D/A (digital to analog) converter 70, the adder 68 generates a velocity error signal, and the velocity of the tracking coil 20 is controlled at the track jump.

Further, the detection signal LPOS of the track direction position detector 44 is supplied to the power amplifier 62 through a phase compensation circuit 72, an adder 74, and a transfer switch SW2 of the mode switching circuit 64. The transfer switch SW2 is turned ON upon a track pull-in after a rough access by the voice coil motor 50 is finished, and is turned OFF when the tracking servo is operated by turning ON the transfer switch SW1 after the track pull-in is completed. At the track jump, when the transfer switch SW3 is made ON, the transfer switch SW2 and the transfer switch SW1 are turned OFF. A pre-measured eccentricity amount (ECCEN.) of the optical disk 46 is supplied to the adder 74, by the MPU 200, through the D/A converter 76, in synchronization with the disk rotation, as a reference eccentricity amount. Thus, the error signal of the position detection signal LPOS following the track eccentricity amount is generated from the adder 74, and as a result, the power amplifier 62 supplies an electric current through the tracking coil 20 so that the actuator is moved by the pre-measured track eccentricity amount.

The detection signal TES of the tracking error detector 58 is subjected to wave-shaping by a shaping circuit 76 and supplied to the MPU 200 as a tracking crossing pulse TCP. The MPU 200 counts the tracking cross pulses TCP at the track jump, and after reaching the target track number, the velocity control is transferred to the position control.

Below, the control system of the voice coil motor 50 is explained. The movement of the carriage 52 by the voice coil motor 50 is detected by a linear encode 78, the detection signal of the linear encoder 78 is supplied to a velocity signal forming circuit 80, and the carriage velocity is detected. The velocity signal of the velocity signal forming circuit 80 is compared with the target velocity Vrl supplied by the MPU 200 via a D/A converter 84 to an adder 82, and the velocity error signal is generated and supplied to a power amplifier 56 through a transfer switch SW4, and thus the velocity of the voice coil motor 50 is controlled.

On the other hand, the detection signal LPOS of the track direction position detector 44 is supplied to a phase compensation circuit 54, the output of the phase compensation circuit 54 is supplied to the power amplifier 56 through a transfer switch SW5, and the power amplifier 56 controls the voice coil motor 50 to execute a position control such that the track direction position detection signal LPOS becomes zero.

The output of the linear encoder 78 is supplied to the MPU 200 through a shaping circuit 86, as a position pulses POSP, and the MPU 200 counts the position pulses POSP obtained at the track access whilst the voice coil motor 50 is under velocity control, i.e. whilst the transfer switch SW4 is turned ON. After reaching the target position, the transfer switch SW4 is turned OFF, and simultaneously, the transfer switch SW5 is turned ON, and thus the velocity control is switched to the position control.

The optical disk device of Figures 4A and 4B, including the above-discussed double servo arrangement, also comprises a comparator 88 for determining whether or not the detection signal LPOS of the track direction position detector 44 has reached a zero signal state indicating a neutral position, a D/A converter 90 for constantly supplying an offset current through the tracking coil 20 whilst the optical disk device is in its usual operation mode, which offset current is measured in an offset measuring mode, and an adder 92 for adding the offset to the input side of the power amplifier 62.

Further, the MPU 200 has a function of controlling the offset measuring means and the offset eliminating means.

Namely, if the offset measuring mode is selected by an operator or by software at the start of the operation in the optical disk device, the MPU 200, for example, outputs sequentially decreasing digital offset data, starting from a predetermined initial value, to the D/A converter 90, and the D/A converter 90 converts it to an analog signal, when all the transfer switches SW1 to SW5 of the mode switching circuit 64 are OFF. This analog signal is applied to the power amplifier 62 via the adder 92. In this way the driving current supplied by the power amplifier 62 to the tracking coil 20 of the actuator is sequentially decreased. As the driving current flowing through the tracking coil 20 is being decreased in this way, the detection signal LPOS produced by the track direction position detector 44 in accordance with the position detector 26 is monitored by the comparator 88, and the MPU 200 stores and holds the offset data in the D/A converter 90 at the moment when, according to the output LPOSZ of the comparator 88, the track direction position detection signal LPOS becomes zero. Then, in the usual operating mode of the optical disk device (commencing after the end of the offset measuring mode), the offset data stored and held in the offset measuring mode is constantly supplied to the D/A converter 90 and added by the adder 92 to the control signal obtained from the mode switching circuit 64, and the offset of the tracking error signal due to the spring force of the actuator is eliminated.

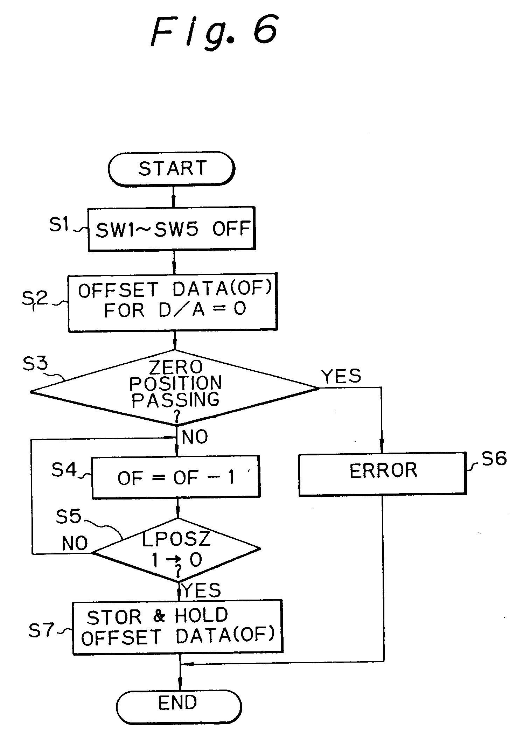

Figure 6 is a flowchart showing an offset measuring process carried out by the MPU 200 in the device of Figs. 4A and 4B.

In Fig. 6, if the MPU 200 detects that the offset measuring mode has been selected, at least the transfer switches SW1 to SW5 provided in the mode switching circuit 64 are turned OFF at step 1, and the preparation for offset measuring is executed.

The process then proceeds to step S2, and the offset data OF for the D/A converter 90 is set to zero, and then to step S3, wherein the output LPOSZ of the comparator 88 is examined to determine whether or not the output has changed from 1 to 0 or 0 to 1, when the offset data is in the zero state. At that time, if it is determined that the output changes from 0 to 1 or from 1 to zero (i.e. that the actuator is already in the zero position) when the offset data OF is in this zero state, the actuator itself is considered faulty, and the process proceeds to step S6, and after the error is reported, the measuring process ends.

If the offset data is set to zero in step S3, and the "zero position" output is not received from the comparator 88, the actuator is considered normal and the process proceeds to step S4. In step S4, for example, the maximum positive offset data value is set, the offset data is initially output as is, and the process proceeds to step S5. Then it is determined whether the output of the comparator 88 has reached zero, and if the output has not reached zero, the process returns to step S4. In step S4, the offset data is decreased by 1 step (usually equal to the resolution of the D/A converter), and the processes of steps S4 and S5 are repeated. When, during the process of the repeated decrease of the offset data by one step in steps S4 and S5, the zero position (in which the output of the comparator 88 changes from 1 to 0) is detected in step S5 the process proceeds to step S7 and the offset data OF at that time is stored and held, and the process is ended.

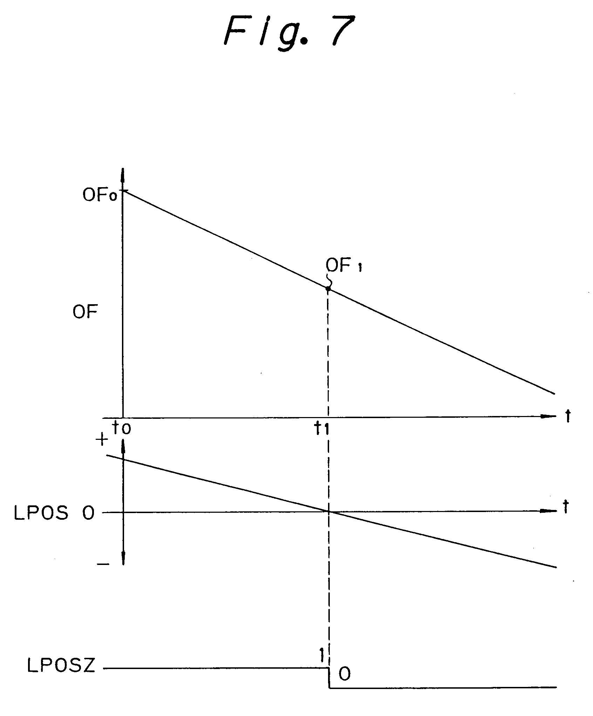

Figure 7 shows a waveform diagram of the signals in the offset measuring process operation in Fig. 6. For example, assuming that the initial offset data OF0 is applied to the D/A converter 90 at time t0, the track direction position signal LPOS corresponding to the offset data is obtained, and subsequently, the offset data is decreased one step at a time. As a result, the track direction position detection signal LPOS is decreased; if the track direction position detection signal LPOS reaches zero at the time t1, the track zero position signal LPOSZ at the output of the comparator is inverted from 1 to 0, and the offset data OF1 at that time is stored and held in the MPU 200.

In the usual operating mode of the optical disk device, the offset data obtained by the offset measuring process, as shown in Figs. 6 and 7, is supplied to the D/A converter 90, the offset signal converted to an analog signal by the D/A converter 90 is supplied to the power amplifier 62 via the adder 92, and the offset signal is constantly applied to the tracking coil 20. Therefore, if the balanced position attained under the influence by the spring member of the actuator is different from the zero signal detection position detected by the position detector 26, the actuator is maintained in a rotated disposition, so that the difference is eliminated, by the offset current passing through the tracking coil.

As a result, the actuator is driven by the offset current and the neutral position due to the spring member always coincides with the zero signal position by the position.detector 26, and accordingly, the servocontrol using the voice coil motor 50 to correct the position difference is not executed. Therefore, if an imbalance due to the spring member exists, the offset of the tracking error signal TES can be always suppressed to zero. Thus, since the tracking error signal has no offset, at the end of a track jump (velocity control of the actuator coil in which, as soon as the transfer switches SW1 and SW2 are turned OFF, the transfer switch SW3 is turned ON), the tracking error signal rapidly converges to zero. Subsequently, simultaneously with the change of the tracking servo to ON, i.e. after the transfer switch S3 is turned OFF and the velocity control released, the transfer switches SW1 and SW2 are turned ON and the position control by the tracking servo can be carried out.

Although in the embodiment of Figure 4 an actuator which slidably rotates around an axis as shown in Figs. 8, 9 and 10 is used, in other embodiments of the invention galvanomirror type and relay lens type actuators can be used.

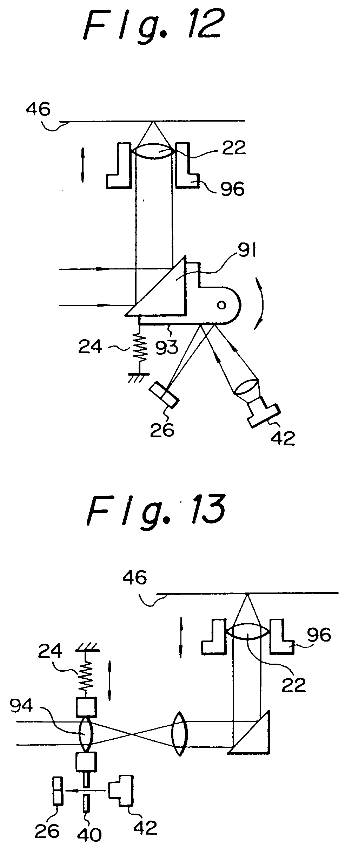

The galvanomirror type actuator shown in Fig. 12 is provided with a galvanomirror 91, which is tracking controlled, held at an equilibrium position by a spring member 24, and a position detector comprises a reflection surface 93 of the mirror support portion, a light emitting portion 42, and a two-part photodiode 26. The galvanomirror is moved, as shown by the arrow, by an electric current. This actuator can be applied to the embodiment of Figs. 4A and 4B as is. In addition, 96 is a focus actuator.

In the relay lens type actuator of Fig. 13, the relay lens 94 is moved perpendicularly to the optical axis by an electric current and the tracking control is carried out. The position of the lens is balanced by a spring member 24 at an equilibrium position. This actuator further comprises a slit plate 40 (slit-defining portion), a light emitting portion 42, and a two-part photodiode 26. The light from the light emitting portion 42 is supplied to the two-part photodiode through the slit plate 40. These elements constitute the position detector. Accordingly, the relay lens type actuator can be applied to the above-mentioned embodiment of Figs. 4A and 4B as is.

Further, in the optical disk device described above, not only is an offset of the track direction position detection signal eliminated, but also the eccentricity is eliminated in accordance with a track eccentricity distance of the optical disk measured in advance. However, the described offset elimination process is applicable to an optical disk device not provided with the facility to cancel this track eccentricity distance.

When using an optical disc device and/or an offset eliminating method embodying the invention, if an offset is generated in the tracking error signal owing to an unbalanced spring force, corresponding to a difference between the equilibrium position, towards which the spring member tends to urge the actuator rotation member, and the desired neutral position (zero signal position) of the position detector, the offset is eliminated by constantly apply a premeasured electric bias current, for offset compensation, to the tracking coil, thereby effectively bringing the equilibrium position due to the spring member into coincidence with the desired neutral position of the position detector. Thus, the stability and the response characteristic can be increased at the track jump and a high speed track access can be realised.

## Claims

1. An optical disc drive unit, for supporting and rotating an optical disc, including:
an optical head (100), movable across a main face of such an optical disc (46) when the unit is in use, for providing an optical beam to be incident at a desired point on the said main face;
an actuator device, movable with the said optical head, having a beam-deflecting member (18; 91; 94) that is displaceable relative to the optical head to adjust the position of the point of incidence of the said beam on the said main face, and having drive means (62), for controlling such displacement of the said beam-deflecting member in dependence upon a drive signal applied to the drive means, and resilient biassing means (24), connected effectively between the beam-deflecting member and a body portion (10) of the device, for urging the said beam-deflecting member towards an equilibrium position when no such drive signal is applied; and
position detection means (42, 40, 26) for detecting when the said beam-deflecting member (18; 91; 94) is at a desired neutral position relative to the said optical head (100);
characterised by offset compensation means (28, 30), operable when no such drive signal is applied to the drive means, to determine a bias signal which, applied to the said drive means, serves to cancel any offset of the said beam-deflecting member from its said desired neutral position relative to the said optical head, and operable thereafter to superimpose the said bias signal on such drive signals applied to the said drive means.

2. A unit as claimed in claim 1, wherein the said offset compensation means comprise:
offset measuring means (28) operable, in an offset measuring mode of the unit wherein no such drive signal is applied to the said drive means, to cause a sequence of different bias signal values to be applied to the said drive means, and to store and hold the bias signal value at which the said position detection means (42, 26) detects that the said beam-deflecting member (18) is at the said desired neutral position; and
offset elimination means (30) operable, when the unit is in normal use, to supply to the said drive means the bias signal value stored by the said offset measuring means in the said offset measuring mode.

3. A unit as claimed in claim 2, wherein the said offset measuring means (30) comprise:
a track direction position detector (44) connected to the said position detection means (26) for receiving a detection signal produced thereby and operable to generate a position signal (LPOS) indicative of the current position of the said beam on the said main face;
a comparator (88) connected to the said track direction position detector (44) for receiving the said position signal (LPOS) and operable to compare that signal with a reference voltage;
a microprocessor (200) operable to generate a series of different digital offset values (OF) in the said offset measuring mode; and
a digital-to-analog converter (90) connected to the said microprocessor (200) for receiving therefrom in turn the different digital offset values of the said series and operable to convert those digital offset values (OF) into respective corresponding analog bias signal values for application to the said drive means in the said offset measuring mode.

4. A unit as claimed in claim 3, wherein the said microprocessor is operable, in the said offset measuring mode, to store the digital offset value (OF₁) of the said series at which the position detection means (26) detects that the beam-deflecting member is in the desired neutral position, and the stored digital offset value (OF₁) is converted into its corresponding analog bias signal value by the said digital-to-analog converter (90) and is superimposed by an adder (92) on the said drive signal when the unit is in normal use.

5. A unit as claimed in any preceding claim, wherein the said actuator device includes a magnetic field structure (10) that is fixed to the said optical head (100), and the said beam-deflecting member (18) is a rotary member which is supported by the said magnetic field structure for rotary movement relative thereto and which carries a tracking coil; the said resilient biassing means (24) comprising a spring member.

6. A unit as claimed in any one of claims 1 to 4, wherein:
the said beam-deflecting member of the actuator device comprises a galvanomirror (91), connected by a spring member (24), constituting the said resilient biassing means, to the said body portion of the device, for receiving light from a light source and for reflecting such light in a direction substantially perpendicular to the direction of incidence of that light onto the galvanomirror;
the actuator device further includes an object lens (22) arranged for receiving the light reflected by the galvanomirror and for directing it to be incident on the said main face; and
the said position detection means comprise a light emitter (42), arranged for directing light to be incident on a reflecting surface portion (93) of the said galvanomirror (91), and also comprise a two-part optical sensor (26) arranged for detecting when the light reflected by the said reflecting surface portion (93) from the said light emitter is in a predetermined direction.

7. A unit as claimed in any one of claims 1 to 4, wherein:
the said beam-deflecting member of the actuator device comprises a relay lens (94), connected by a spring member (24), constituting the said resilient biassing means, to a fixed board which serves as the said body portion of the device and movable relative to the said fixed board in a first direction, for receiving light from a light source in a direction perpendicular to the said first direction;
the said actuator device further comprises a mirror arranged for reflecting light that has passed through the said relay lens in a direction substantially parallel to the said first direction, and an object lens (22) arranged for receiving the light reflected by the said mirror and for directing it onto the said main face; and
the said position detection means (42, 40, 26) comprise a slit-defining portion (40), connected to the said relay lens so as to be responsive to such movement thereof in the said first direction and having a slit therein, and also comprise a light emitter (42), arranged on one side of the said slit-defining portion for directing light towards that portion, and a two-part optical sensor (26) arranged on the other side of the said slit-defining portion for detecting passage of light from the light emitter through the said slit.

8. A method of eliminating an offset in an optical disc drive unit including an optical head (100), movable across a main face of an optical disc (46) which is supported and rotated by the unit when in use, for providing an optical beam to be incident at a desired point on the said main face, and also including an actuator device, movable with the said optical head, having a beam-deflecting member (18; 91; 94) that is displaceable relative to the optical head to adjust the position of the point of incidence of the said beam on the said main face, and having drive means (62), for controlling such displacement of the said beam-deflecting member in dependence upon a drive signal applied to the drive means, resilient biassing means (24), connected effectively between the beam-deflecting member and a body portion (10) of the device, for urging the said beam-deflecting member towards an equilibrium position when no such drive signal is applied, and position detection means (42, 40, 26) for detecting when the said beam-deflecting member (18; 91; 94) is at a desired neutral position relative to the said optical head (100);
which method comprises the steps of:
determining, when no such drive signal is applied to the drive means, a bias signal which, applied to the said drive means, serves to cancel any offset of the said beam-deflecting member from its said desired neutral position relative to the said optical head; and
thereafter superimposing the said bias signal on such drive signals applied to the said drive means.

## Patentansprüche

1. Antriebseinheit für eine optische Platte zum Tragen und Rotieren einer optischen Platte, die enthält:
einen optischen Kopf (100), der über eine Hauptfläche einer solchen optischen Platte (46) bewegbar ist, wenn die Einheit in Verwendung ist, zum Bereitstellen eines optischen Strahls, der auf einer gewünschten Stelle auf der Hauptfläche auftreffen soll;
eine Stellglied-Vorrichtung, die mit dem optischen Kopf bewegbar ist und die ein Strahlablenkungsteil (18; 91; 94) hat, das relativ zu dem optischen Kopf versetzbar ist, um die Position der Auftreffstelle des Strahles auf der Hauptfläche einzustellen, und die eine Antriebseinrichtung (62) zum Steuern dieses Versatzes des Strahlablenkungsteils in Abhängigkeit von einem Antriebssignal, das an die Antriebseinrichtung angelegt wird, und eine elastische Vorspanneinrichtung (24), die wirksam zwischen dem Strahlablenkungsteil und einem Körperabschnitt (10) der Vorrichtung verbunden ist, zum Drängen des Strahlablenkungsteils in Richtung einer Gleichgewichtsposition hat, wenn kein solches Antriebssignal angelegt ist; und
eine Positionsdetektionseinrichtung (42, 40, 26) zum Detektieren, wenn das Strahlablenkungsteil (18; 91; 94) in einer gewünschten Neutralposition relativ zu dem optischen Kopf (100) ist;
gekennzeichnet durch eine Offset-Kompensationseinrichtung (28, 30), die betriebsfähig ist, wenn kein solches Antriebssignal an die Antriebseinrichtung angelegt ist, ein Vorspannungssignal zu bestimmen, das, wenn es an die Antriebseinrichtung angelegt ist, dazu dient, irgendeinen Offset des Strahlablenkungsteils von seiner gewünschten Neutralposition relativ zum optischen Kopf auszulöschen, und danach betriebsfähig ist, das Vorspannungssignal mit solchen Antriebssignalen, die an die Antriebseinrichtung angelegt sind, zu überlagern.

2. Einheit, wie in Anspruch 1 beansprucht, worin die Offset-Kompensationseinrichtung aufweist:
eine Offset-Meßeinrichtung (28), die in einem Offset-Meßmodus der Einheit arbeitet, worin kein solches Antriebssignal an die Antriebseinrichtung angelegt ist, um eine Sequenz von unterschiedlichen Vorspannungssignalwerten zu verursachen, die an die Antriebseinrichtung anzulegen sind, und um den Vorspannungssignalwert zu speichern und festzuhalten, bei dem die Positionsdetektionseinrichtung (42, 26) detektiert, daß das Strahlablenkungsteil (18) an der gewünschten Neutralposition ist; und
eine Offset-Eliminierungseinrichtung (30), die betriebsfähig ist, wenn die Einheit in normaler Verwendung ist, den Vorspannungssignalwert, der durch die Offset-Meßeinrichtung in dem Offset-Meßmodus gespeichert wurde, der Antriebseinrichtung zuzuführen.

3. Einheit, wie in Anspruch 2 beansprucht, worin die Offset-Meßeinrichtung (30) aufweist:
einen Spur-Richtungs-Positionsdetektor (44), der mit der Positionsdetektionseinrichtung (26) zum Empfangen eines davon erzeugten Detektionssignals verbunden ist und der betriebsfähig ist, ein Positionssignal (LPOS) zu erzeugen, das eine Momentanposition des Strahles auf der Hauptfläche anzeigt;
einen Vergleicher (88), der mit dem Spur-Richtungs-Positionsdetektor (44) zum Empfangen des Positionssignals (LPOS) verbunden ist und der betriebsfähig ist, das Signal mit einer Referenzspannung zu vergleichen;
einen Mikroprozessor (200), der betriebsfähig ist, eine Serie von unterschiedlichen, digitalen Offsetwerten (OF) in dem Offset-Meßmodus zu erzeugen; und
einen Digital-zu-Analog-Wandler (90), der mit dem Mikroprozessor (200) zum Empfangen von diesem wiederum der unterschiedlichen, digitalen Offsetwerte der Serie verbunden ist und der betriebsfähig dazu ist, diese digitalen Offsetwerte (OF) in jeweils entsprechende, analoge Vorspannungssignalwerte zur Anlegung an die Antriebseinrichtung in dem Offset-Meßmodus umzuwandeln.

4. Einheit, wie in Anspruch 3 beansprucht, worin der Mikroprozessor in dem Offset-Meßmodus betriebsfähig ist, den digitalen Offsetwert (OF₁) der Serie zu speichern, bei dem die Positionsdetektionseinrichtung (26) detektiert, daß das Strahlablenkungsteil in der gewünschten Neutralposition ist, und worin der gespeicherte, digitale Offsetwert (OF₁) in seinen entsprechenden, analogen Vorspannungssignalwert durch den Digital-zu-Analog-Wandler (90) umgewandelt wird und durch einen Addierer (92) dem Antriebssignal überlagert wird, wenn die Einheit in ihrer normalen Verwendung ist.

5. Einheit, wie in irgendeinem vorhergehenden Anspruch beansprucht, worin die Stellglied-Vorrichtung eine Magnetfeldstruktur (10) enthält, die an dem optischen Kopf (100) befestigt ist, und worin das Strahlablenkungsteil (18) ein Rotationsteil ist, das von der Magnetfeldstruktur für eine Rotationsbewegung relativ dazu getragen wird und das eine Spurverfolgungsspule trägt; worin die elastische Vorspanneinrichtung (24) ein Federteil aufweist.

6. Einheit, wie in irgendeinem der Ansprüche 1 bis 4 beansprucht, worin:
das Strahlablenkungsteil der Stellglied-Vorrichtung einen Galvanospiegel (91), der durch ein Federteil (24), das die elastische Vorspanneinrichtung bildet, mit dem Körperabschnitt der Vorrichtung verbunden ist, zum Empfangen von Licht von einer Lichtquelle und zum Reflektieren dieses Lichts in eine Richtung im wesentlichen rechtwinklig zu der Richtung des Auftreffens dieses Lichts auf den Galvanospiegel aufweist;
die Stellglied-Vorrichtung weiterhin eine Objektivlinse (22) enthält, die zum Empfangen von Licht, das von dem Galvanospiegel reflektiert wird, und zum Lenken des Lichts, daß es auf die Hauptfläche auftrifft, angeordnet ist; und
die Positionsdetektionseinrichtung einen Lichtemitter (42) aufweist, der zum Lenken des Lichts derart, daß es auf einen Reflexionsoberflächenabschnitt (93) des Galvanospiegels (91) auftrifft, angeordnet ist, und auch einen zweiteiligen, optischen Sensor (26) aufweist, der zum Detektieren, wenn das Licht, das von dem Reflexionsoberflächenabschnitt (93) reflektiert wird, von dem Lichtemitter in einer vorgegebenen Richtung ist, angeordnet ist.

7. Einheit, wie in einem der Ansprüche 1 bis 4 beansprucht, worin:
das Strahlablenkungsteil der Stellglied-Vorrichtung eine Relaislinse (94) aufweist, die durch ein Federteil (24), das die elastische Vorspanneinrichtung bildet, mit einer fixierten Platte verbunden ist, die als der Körperabschnitt der Vorrichtung dient, und die relativ zu der fixierten Platte in einer ersten Richtung bewegbar ist, zum Empfangen von Licht von einer Lichtquelle in einer Richtung rechtwinklig zu der ersten Richtung;
die Stellglied-Vorrichtung weiterhin einen Spiegel aufweist, der zum Reflektieren von Licht angeordnet ist, das durch die Relaislinse in einer Richtung im wesentlichen parallel zu der ersten Richtung hindurchgegangen ist, und eine Objektivlinse (22), die zum Empfangen von Licht, das durch den Spiegel reflektiert wurde, und zum Lenken des Lichts auf die Hauptfläche angeordnet ist; und
die Positionsdetektionseinrichtung (42, 40, 26) einen Schlitzbegrenzungsabschnitt (40) umfaßt, der mit der Relaislinse derart verbunden ist, daß er auf eine Bewegung davon in der ersten Richtung reagiert und der einen Schlitz darin hat und auch einen Lichtemitter (42), der auf einer Seite des Schlitzbegrenzungsabschnitts angeordnet ist, zum Lenken des Lichts in Richtung des Abschnitts, und einen zweiteiligen, optischen Sensor (26), der an der anderen Seite des Schlitzbegrenzungsabschnitts angeordnet ist, zum Detektieren des Durchgangs von Licht von dem Lichtemitter aus durch den Schlitz.

8. Verfahren zum Eliminieren eines Offsets in einer Antriebseinheit für eine optische Platte, die einen optischen Kopf (100), der über eine Hauptfläche der optischen Platte (46) bewegbar ist, die durch die Einheit getragen und rotiert wird, wenn sie in Verwendung ist, zum Bereitstellen eines optischen Strahles hat, der auf eine gewünschte Stelle auf der Hauptfläche auftreffen soll, und die auch eine Stellglied-Vorrichtung aufweist, die mit dem optischen Kopf bewegbar ist und ein Strahlablenkungsteil (18; 91; 94) hat, das relativ zum optischen Kopf versetzbar ist, um die Position der Auftreffstelle des Strahles auf der Hauptfläche einzustellen, und die eine Antriebseinrichtung (62) zum Steuern dieses Versatzes des Strahlablenkungsteils in Abhängigkeit von einem Antriebssignal, das an die Antriebseinrichtung angelegt wird, eine elastische Vorspanneinrichtung (24), die wirksam zwischen dem Strahlablenkungsteil und einem Körperabschnitt (10) der Vorrichtung verbunden ist, zum Drängen des Strahlablenkungsteils in Richtung einer Gleichgewichtsposition, wenn kein solches Antriebssignal angelegt ist, und eine Positionsdetektionseinrichtung (42, 40, 26) zum Detektieren hat, wenn das Strahlablenkungsteil (18; 91; 94) an einer gewünschten Neutralposition relativ zu dem optischen Kopf (100) ist;
wobei das Verfahren die Schritte aufweist:
Bestimmen, wenn kein solches Antriebssignal an die Antriebseinrichtung angelegt ist, eines Vorspannungssignals, das, wenn es an die Antriebseinrichtung angelegt ist, dazu dient, irgendeinen Offset des Strahlablenkungsteils von dessen gewünschter Neutralposition relativ zu dem optischen Kopf auszulöschen; und
danach Überlagern des Vorspannungssignals mit diesen Antriebssignalen, die an die Antriebseinrichtung angelegt sind.

## Revendications

1. Unité d'entraînement de disque optique permettant de supporter et de mettre en rotation un disque optique, incluant :
une tête optique (100) mobile sur une face principale d'un disque optique (46) lorsque l'unité est en utilisation pour produire un faisceau optique destiné à arriver en incidence en un point souhaité sur ladite face principale ;
un dispositif d'actionneur mobile avec ladite tête optique, comportant un élément de déviation de faisceau (18 ; 91 ; 94) qui peut être déplacé par rapport à la tête optique afin de régler la position du point d'incidence dudit faisceau sur ladite face principale optique et comportant un moyen d'entraînement (62) pour contrôler ce déplacement dudit élément de déviation de faisceau en fonction d'un signal d'entraînement appliqué au moyen d'entraînement et un moyen de poussée élastique (24) connecté efficacement entre l'élément de déviation de faisceau et une partie de corps (10) du dispositif pour pousser ledit élément de déviation de faisceau vers une position d'équilibre lorsqu'aucun signal d'entraînement n'est appliqué ; et
un moyen de détection de position (42, 40, 26) pour détecter lorsque ledit élément de déviation de faisceau (18 ; 91 ; 94) est à une position neutre souhaitée par rapport à ladite tête optique (100),
caractérisée par un moyen de compensation de décalage (28, 30) qui peut opérer lorsqu'aucun signal d'entraînement n'est appliqué au moyen d'entraînement, pour déterminer un signal de poussée qui, appliqué audit moyen d'entraînement, sert à annuler un quelconque décalage dudit élément de déviation de faisceau par rapport à sa dite position neutre souhaitée par rapport à ladite tête optique et qui peut opérer ensuite pour superposer ledit signal de poussée sur des signaux d'entraînement appliqués audit moyen d'entraînement.

2. Unité selon la revendication 1, dans laquelle ledit moyen de compensation de décalage comprend :
un moyen de mesure de décalage (28) qui peut opérer, dans un mode mesure de décalage de l'unité dans lequel aucun signal d'entraînement n'est appliqué audit moyen d'entraînement, pour provoquer l'application d'une séquence de valeurs de signal de poussée différentes audit moyen d'entraînement et pour stocker et bloquer la valeur de signal de poussée à laquelle ledit moyen de détection de position (42, 26) détecte que ledit élément de déviation de faisceau (18) est à ladite position neutre souhaitée ; et
un moyen d'élimination de décalage (30) qui peut opérer, lorsque l'unité est en utilisation normale, pour appliquer audit moyen d'entraînement la valeur de signal de poussée stockée dans ledit moyen de mesure de décalage dans ledit mode mesure de décalage.

3. Unité selon la revendication 2, dans laquelle ledit moyen de mesure de décalage (30) comprend :
un détecteur de position de direction de piste (44) connecté audit moyen de détection de position (26) pour recevoir un signal de détection produit ainsi et pouvant fonctionner pour générer un signal de position (LPOS) indicatif de la position courante dudit faisceau sur ladite face principale ;
un comparateur (88) connecté audit détecteur de position de direction de piste (44) pour recevoir ledit signal de position (LPOS) et pouvant fonctionner pour comparer ce signal à une tension de référence ;
un microprocesseur (200) qui peut fonctionner pour générer une série de valeurs de décalage numériques différentes (OF) dans ledit mode mesure de décalage ; et
un convertisseur numérique/analogique (90) connecté audit microprocesseur (200) pour en recevoir tour à tour les valeurs de décalage numériques différentes de ladite série et pouvant fonctionner pour convertir ces valeurs de décalage numériques (OF) en valeurs de signal de poussée analogiques correspondantes respectives en vue d'une application audit moyen d'entraînement dans ledit mode mesure de décalage.

4. Unité selon la revendication 3, dans laquelle ledit microprocesseur peut fonctionner, dans ledit mode mesure de décalage, pour stocker la valeur de décalage numérique (OF₁) de ladite série à laquelle le moyen de détection de position (26) détecte que l'élément de déviation de faisceau est dans la position neutre souhaitée et la valeur de décalage numérique stockée (OF₁) est convertie en sa valeur de signal de poussée analogique correspondante par ledit convertisseur numérique/analogique (90) et est superposée par un additionneur (92) sur ledit signal d'entraînement lorsque l'unité est en utilisation normale.

5. Unité selon l'une quelconque des revendications précédentes, dans laquelle ledit dispositif d'actionneur inclut une structure de champ magnétique (10) qui est fixée à ladite tête optique (100) et ledit élément de déviation de faisceau (18) est un élément tournant qui est supporté par ladite structure de champ magnétique de manière à pouvoir réaliser un déplacement tournant par rapport à celle-ci et qui supporte une bobine de suivi ; ledit moyen de poussée élastique (24) comprenant un élément de ressort.

6. Unité selon l'une quelconque des revendications 1 à 4, dans laquelle :
ledit élément de déviation de faisceau du dispositif d'actionneur comprend un miroir galvanométrique (91) connecté par un élément de ressort (24) qui constitue ledit moyen de poussée élastique à ladite partie de corps du dispositif pour recevoir de la lumière provenant d'une source de lumière et pour réfléchir cette lumière suivant une direction sensiblement perpendiculaire à la direction d'incidence de cette lumière sur le miroir galvanométrique ;
le dispositif d'actionneur inclut en outre une lentille objet (22) agencée pour recevoir la lumière réfléchie par le miroir galvanométrique et pour la diriger de manière à ce qu'elle arrive en incidence sur ladite face principale ; et
ledit moyen de détection de position comprend un émetteur de lumière (42) agencé pour diriger la lumière qui doit arriver en incidence sur une partie de surface réfléchissante (93) dudit miroir galvanométrique (91) et comprend également un capteur optique en deux parties (26) agencé pour détecter lorsque la lumière réfléchie par ladite partie de surface réfléchissante (93) depuis ledit émetteur de lumière est suivant une direction prédéterminée.

7. Unité selon l'une quelconque des revendications 1 à 4, dans laquelle :
ledit élément de déviation de faisceau du dispositif d'actionneur comprend une lentille relais (94) connectée par un élément de ressort (24) qui constitue ledit moyen de poussée élastique à une plaquette fixe qui joue le rôle de ladite partie de corps du dispositif et qui est mobile par rapport à ladite plaquette fixe suivant une première direction pour recevoir la lumière provenant d'une source de lumière suivant une direction perpendiculaire à ladite première direction ;
ledit dispositif d'actionneur comprend en outre un miroir agencé pour réfléchir la lumière qui a traversé ladite lentille relais suivant une direction sensiblement parallèle à ladite première direction et une lentille objet (22) agencée pour recevoir la lumière réfléchie par ledit miroir et pour la diriger sur ladite face principale ; et
ledit moyen de détection de position (42, 40, 26) comprend une partie de définition de fente (40), connectée à ladite lentille relais de manière à être sensible à son déplacement suivant ladite première direction et comportant une fente en son sein, et comprend également un émetteur de lumière (42) agencé sur un côté de ladite partie de définition de fente pour diriger la lumière en direction de cette partie et un capteur optique en deux parties (26) agencé sur l'autre côté de ladite partie de définition de fente pour détecter le passage de la lumière provenant de l'émetteur de lumière au travers de ladite fente.

8. Procédé d'élimination d'un décalage dans une unité d'entraînement de disque optique incluant une tête optique (100) mobile sur une face principale d'un disque optique (46) qui est supporté et mis en rotation par l'unité lorsqu'elle est en utilisation, pour produire un faisceau optique de manière à ce qu'il arrive en incidence en un point souhaité sur ladite face principale et incluant également un dispositif d'actionneur mobile avec ladite tête optique comportant un élément de déviation de faisceau (18 ; 91 ; 94) qui peut être déplacé par rapport à la tête optique afin de régler la position du point d'incidence dudit faisceau sur ladite face principale et comportant un moyen d'entraînement (62) pour contrôler ce déplacement dudit élément de déviation de faisceau en fonction d'un signal d'entraînement appliqué au moyen d'entraînement, un moyen de poussée élastique (24) connecté efficacement entre l'élément de déviation de faisceau et une partie de corps (10) du dispositif pour pousser ledit élément de déviation de faisceau vers une position d'équilibre lorsqu'aucun signal d'entraînement n'est appliqué et un moyen de détection de position (42, 40, 26) pour détecter lorsque ledit élément de déviation de faisceau (18 ; 91 ; 94) est à une position neutre souhaitée par rapport à ladite tête optique (100) ;
le procédé comprenant les étapes de :
détermination, lorsqu'aucun signal d'entraînement n'est appliqué au moyen d'entraînement, d'un signal de poussée qui, appliqué audit moyen d'entraînement, sert à annuler un quelconque décalage dudit élément de déviation de faisceau par rapport à sa dite position neutre souhaitée par rapport à ladite tête optique ; et de
superposition dudit signal de poussée sur les signaux d'entraînement appliqués audit moyen d'entraînement.
